# EUROPÄISCHE PATENTSCHRIFT

(11) **EP 3 100 121 B1**
(45) Veröffentlichungstag und Bekanntmachung des Hinweises auf die Patenterteilung: **30.12.2020**
(21) Anmeldenummer: 15701770.8
(22) Anmeldetag: 28.01.2015
(51) Int. Cl.: G05B 9/02, G05B 19/05, G05B 19/042

(54) **VERFAHREN UND VORRICHTUNG ZUM SICHEREN ABSCHALTEN EINER ELEKTRISCHEN LAST**
METHOD AND APPARATUS FOR SAFELY DISCONNECTING AN ELECTRICAL LOAD
PROCÉDÉ ET DISPOSITIF POUR DÉCONNECTER EN TOUTE SÉCURITÉ UNE CHARGE ÉLECTRIQUE

(30) Priorität: 28.01.2014 DE 102014100970
(43) Veröffentlichungstag der Anmeldung: 07.12.2016
(73) Patentinhaber: Pilz GmbH & Co. KG, 73760 Ostfildern (DE)
(72) Erfinder: HAERTER, Michael, 73760 Ostfildern (DE); SEIZINGER, Dietmar, 73760 Ostfildern (DE)
(74) Vertreter: Witte, Weller & Partner Patentanwälte mbB
(86) Internationale Anmeldenummer: PCT/EP2015/051674
(87) Internationale Veröffentlichungsnummer: WO 2015/113994

(56) Entgegenhaltungen:
- EP-A2- 2 228 699
- EP-B1- 1 620 768
- WO-A1-2014/012976
- DE-B3-102010 054 386

## Beschreibung

Die vorliegende Erfindung betrifft ein Verfahren zum sicheren Abschalten einer elektrischen Last sowie eine entsprechende Vorrichtung hierzu.

Allgemein betrifft die Erfindung das Gebiet der sicheren Automatisierungstechnik, insbesondere der Steuerung und Überwachung von sicherheitskritischen Prozessen. Sicherheitskritische Prozesse im Sinne der vorliegenden Erfindung sind technische Abläufe, Zusammenhänge und/oder Ereignisse, bei denen ein fehlerfreies Funktionieren sichergestellt sein muss, um eine Gefahr für Personen oder materielle Werte zu vermeiden. Es handelt sich hierbei insbesondere um die Überwachung und Steuerung von automatisiert ablaufenden Vorgängen im Bereich des Maschinen- und Anlagenbaus zur Vermeidung von Unfällen. Typische Beispiele sind die Absicherung einer Pressenanlage, die Absicherung von automatisiert arbeitenden Robotern oder das Sicherstellen eines gefahrlosen Zustands für Wartungsarbeiten an einer technischen Anlage.

Für derartige Prozesse legen die Normen EN ISO 13839-1 und EN/IEC 62061 Stufen fest, die einerseits die Fähigkeit von sicherheitsbezogenen Teilen einer Steuerung, eine Sicherheitsfunktion unter vorhersehbaren Bedingungen auszuführen, spezifizieren und andererseits die Sicherheitsintegrität der Sicherheitsfunktionen, die dem Prozess zugeordnet sind, angeben. Ersteres ist der sog. Performance-Level (PL) mit Stufen von a bis e, wobei e die höchste Stufe darstellt. Hinsichtlich der Spezifizierung der Sicherheitsintegrität werden Safety-Integrity-Level (SIL) mit den Stufen 1 bis 3 angegeben, wobei ein SIL3 die höchste Stufe darstellt. Die vorliegende Erfindung bezieht sich auf sicherheitskritische Prozesse, für die zumindest ein Performance-Level d bzw. ein Safety-Integrity-Level 2 erfüllt sein muss.

Zur Prozesssteuerung werden zunehmend Steuerungen mit räumlich abgesetzten Eingabe- und Ausgabe-(E/A)-Einheiten eingesetzt, die über eine Datenübertragungsstrecke, insbesondere über einen sog. Feldbus, miteinander verbunden sind. An die Eingabe- und Ausgabeeinheiten werden Sensoren zur Aufnahme von Prozessdaten sowie Aktoren zum Ausführen von Steuervorgängen angeschlossen. Typische Sensoren im Bereich der Sicherheitstechnik sind Not-Aus-Schalter, Schutztüren, Zweihandschalter, Drehzahlsensoren oder Lichtschrankenanordnungen. Typische Aktoren sind bspw. Schütze, mit denen die Antriebe einer überwachten Anlage stromlos geschaltet werden können. Die Eingabe- und Ausgabeeinheiten dienen in einer solchen Anordnung im Wesentlichen als räumlich verteilte Signalaufnehmer- und Signalausgabestationen, während die eigentliche Verarbeitung der Prozessdaten und die Generierung von Steuersignalen für die Aktoren durch eine übergeordneten Steuereinheit, bspw. eine speicherprogrammierbare Steuerung (SPS), erfolgen.

Um mit einem busbasierten System sicherheitskritische Prozesse steuern zu können, muss die Datenübertragung von den Eingabe- und Ausgabeeinheiten zur Steuereinheit fehlersicher gemacht werden. Es muss insbesondere sichergestellt sein, dass durch Verlust, Wiederholung, Verfälschung, Einfügen oder Verändern übertragener Prozessdaten und/oder durch einen Fehler in einer abgesetzten Eingabe- und Ausgabeeinheit kein gefährlicher Zustand in der Gesamtanlage auftreten kann.

DE 197 42 716 A1 offenbart ein System, bei dem die Absicherung der Übertragungsstrecke dadurch erfolgt, dass sowohl in der übergeordneten Steuereinheit als auch in der abgesetzten Eingabe- und Ausgabeeinheit sog. sicherheitsbezogene Einrichtungen vorhanden sind. Hierbei handelt es sich bspw. um die redundante Auslegung aller Signalaufnahmen-, Signalverarbeitungs- und Signalausgabepfade. Ein sicheres Abschalten kann somit sowohl von einer übergeordneten Steuereinheit als auch von den abgesetzten Einheiten initiiert werden, so dass ein fehlersicheres Abschalten unabhängig von der Datenübertragung gewährleistet werden kann. Die Sicherheitsfunktion ist somit unabhängig von der verwendeten Übertragungstechnik oder der Struktur des Bussystems. Da die Eingabe- und Ausgabeeinheit durch die sicherheitsbezogenen Einrichtungen jedoch selbst Steuerungsfunktionen übernehmen, sind die Einheiten komplex und teuer und eignen sich nicht für Systeme, bei denen eine Vielzahl von Aktoren sicher angesteuert werden müssen. Darüber hinaus muss bei diesem Ansatz für die abgesetzten Eingabe- und Ausgabeeinheiten eine vollständige Eigenfehlersicherheit im Rahmen der Zulassungsverfahren nachgewiesen werden. Dies ist entsprechend aufwändig und teuer.

Ein alternativer Ansatz besteht darin, die abgesetzten Eingabe- und Ausgabeeinheiten "nicht-fehlersicher" auszuführen und stattdessen die Datenübertragungsstrecke zweikanalig, d.h. mit zwei getrennten Signalpfaden, zu realisieren. In diesem Fall hat die übergeordnete Steuereinheit, die fehlersicher ausgelegt ist, die Möglichkeit, zweikanalig auf die Prozessdaten zuzugreifen und die erforderliche Fehlerüberprüfung vorzunehmen. Die Eingabe- und Ausgabeeinheiten selbst können bei diesem Ansatz einkanalig ausgelegt sein, allerdings erhöht sich der Verkabelungsaufwand, da für eine redundante Auslegung der Datenübertragungsstrecke für jede E/A-Einheit eine zusätzliche separate Leitung benötig wird.

Alternativ kann auch über entsprechende Protokolle eine im Hinblick auf Maschinensicherheit sichere Übertragung über eine einkanalige Datenübertragungstrecke erfolgen. Ein Beispiel hierfür ist der von der Anmelderin entwickelte SafetyBUS p Standard, für eine fehlersichere Feldbus-Kommunikation. SafetyBUS p basiert technologisch auf dem Feldbus System CAN, wobei zusätzliche Mechanismen zur Absicherung der Übertragung in den Schichten 2 und 7 des OSI-Referenzsystems hinzukommen. In SafetyBUS p Netzen kommen ausschließlich sicherheitstechnische Geräte zum Einsatz. Neben einer sicheren mehrkanaligen Steuerung werden somit insbesondere auch mehrkanalige Ein- und Ausgabeeinheiten eingesetzt, die die von der sicheren Steuerung empfangenen Daten auf logischer Ebene mehrkanalig redundant verarbeiten.

Ein Zwischenweg zu den zuvor beschriebenen Ansätzen beschreibt die EP 1 620 768 B1, welche eine Mehrfachübertragung der Prozessdaten von den Eingabeeinheiten über eine einkanalige Übertragungsstrecke zu einer Steuereinheit offenbart. Durch die diversitäre Übertragung soll ein fehlersicheres Einlesen zumindest für die Eingangssignale der Übertragungsstrecke gewährleistet werden. Die Prozessdaten werden hierbei für die Übertragung mit einem variablen, sich stetig ändernden Schlüsselwort codiert, wodurch eine determinierte Dynamik der Prozessdaten erzeugt wird, die es ermöglicht, Eingangssignale redundant durch eine übergeordneten Steuereinheit auszuwerten. Auf diese Weise kann bei den Eingabeeinheiten auf eine vollständig redundante Auslegung verzichtet werden. Allerdings ist ausgangsseitig weiterhin ein separater, nicht über den Feldbus geführter Abschaltpfad notwendig, um ein sicheres Abschalten unabhängig von Fehlern in der Übertragung zu gewährleisten. Somit ist zumindest für Ausgabeeinheiten mit sicheren Ausgängen weiterhin eine zusätzliche Leitung notwendig.

DE 199 27 635 B4 offenbart eine weitere Möglichkeit, den zuvor genannten Zwischenweg zu realisieren. Demnach wird zum Absichern einer Steuerung mit abgesetzten Ein- und Ausgabeeinheiten ein zusätzlicher Sicherheitsanalysator eingefügt, welcher den Datenfluss zwischen der Steuereinheit und den abgesetzten Einheiten auf der Übertragungsstrecke mithört und zum Ausführen sicherheitsbezogener Funktionen ausgebildet ist. Durch das Mithören kann der Sicherheitsanalysator die von einem Sensor erfassten Daten mitlesen und durch eine interne Logikeinheit verarbeiten. Zum Steuern der Aktoren überschreibt der Sicherheitsanalysator gegebenenfalls die Datentelegramme, die von der Steuereinheit für einen Aktor bestimmt sind, und fügt eigene Steuerdaten für den Aktor ein. Auf diese Weise kann der Sicherheitsanalysator die Kontrolle über die angeschlossenen Aktoren übernehmen. Zum Erreichen einer hohen Sicherheitskategorie ist jedoch auch bei der Verwendung eines Sicherheitsanalysators ein zusätzlicher Abschaltpfad vorgesehen. Dieser wird durch zusätzliche sichere Ausgänge bereitgestellt, die lokal am Sicherheitsanalysator angeordnet sind. Der Sicherheitsanalysator ist somit dazu ausgebildet, eine zu überwachende Anlage ggf. eigenständig abzuschalten, ohne hierzu Steuerdaten mit einer abgesetzten Ausgabeeinheit auszutauschen. Auf diese Weise kann ein zusätzlicher, über die Ausgabeeinheiten geführter Abschaltpfad entfallen, wodurch sich jedoch der Verkabelungsaufwand nicht verringert, sondern lediglich verlagert wird, da auch hier die lokalen sicheren Ausgänge mit der zu überwachenden Anlage über zusätzliche Leitungen verbunden werden müssen.

Das zuvor beschriebene Konzept des Sicherheitsanalysators ist beispielsweise bei AS-i SAFETY AT WORK umgesetzt worden. Das AS-Interface (abgekürzt AS-i für engl. Actuator-Sensor-Interface) ist ein Standard für die Feldbus-Kommunikation, der zum Anschluss von Aktoren und Sensoren entwickelt worden ist, mit dem Ziel, die Parallelverkabelung zu reduzieren. Mit AS-i SAFETY AT WORK können sicherheitsgerichtete Komponenten in ein AS-i Netz eingebunden werden. Sicherheits- und Standardkomponenten arbeiten dann parallel am selben Kabel, wobei ein zusätzlicher Sicherheitsmonitor die Überwachung der sicherheitsgerichteten Komponenten übernimmt. Der Sicherheitsmonitor verfügt über zweikanalig ausgeführte Freigabekreise zur sicherheitsgerichteten Abschaltung. Das sichere Abschalten über eine abgesetzte Ausgabeeinheit ist somit auch bei AS-i SAFETY AT WORK ohne zusätzliche lokale sichere Ausgänge am Sicherheitsanalysator nicht möglich.

Vor diesem Hintergrund ist es eine Aufgabe, ein alternatives Verfahren zum sicheren Ansteuern abgesetzter Peripherie anzugeben, das einfacher und kostengünstiger ist und ohne zusätzliche Verkabelung und/oder zusätzliche sicherheitsgerichtete Einrichtungen auskommt.

Die Aufgabe wird durch ein Verfahren gemäß Anspruch 1 und einer Ausgabeeinheit gemäß Anspruch 6 gelöst.

Es ist somit eine Idee der vorliegenden Erfindung, ein sicheres Abschalten einer räumlich abgesetzten Peripherie von einer zentralen Steuereinheit über eine ebenfalls abgesetzte Ausgabeeinheit zu ermöglichen. Die abgesetzte Ausgabeeinheit ist dabei nur über eine einkanalige Datenübertragungstrecke mit einer mehrkanaligen Steuereinheit verbunden. Ein zusätzlicher Abschaltpfad oder lokale sicherer Ausgänge an der Steuereinheit sind nicht notwendig, wenn auch trotzdem prinzipiell zur Realisierung eines weiteren Abschaltpfades möglich. Weiterhin ist es vorteilhafterweise nicht erforderlich, die Ausgabeeinheit vollständig mehrkanalig redundant auszulegen. Die Erfindung

sieht vielmehr vor, innerhalb der Ausgabeeinheit durch eine geeignete Signalverarbeitung einer von der sicheren Steuerung bereitgestellten Freigabe eine sichere Abschaltung zu ermöglichen. Die Anforderungen an die hierzu notwendigen Komponenten sind geringer als bei einer vollständig mehrkanalig redundanten Auslegung der Ausgabeeinheit. Eine erfindungsgemäße Ausgabeeinheit kann dadurch kostengünstiger hergestellt werden.

Insbesondere ist im Vergleich zu vollständig zweikanaligen Ausgabeeinheiten mit vollständiger gegenseitiger Kontrolle keine umfangreiche Absprache und Synchronisation zwischen den Verarbeitungseinheiten notwendig. Die Verarbeitungseinheiten verarbeiten nur die für sie relevanten Informationen, so dass nicht beiden Verarbeitungseinheiten alle Informationen zur Verfügung stehen müssen. Darüber hinaus ist es ausreichend, wenn nur eine Verarbeitungseinheit über die Datenübertragungstrecke mit der Steuereinheit kommuniziert, während die zweite Verarbeitungseinheit die relevanten Daten von der ersten Verarbeitungseinheit erhält. Neben geringeren Anforderungen an die Hardware kann so vorteilhafterweise auch die Softwarestruktur vereinfacht werden, so dass auch mit leistungsschwachen Verarbeitungseinheiten eine hohe Performance erreicht werden kann.

Die geringeren Anforderungen an Soft- und Hardware senken vorteilhaft auch den Energieverbrauch der erfindungsgemäßen Ausgabeeinheit gegenüber einer vollständig zweikanaligen Lösung. Insbesondere für abgesetzte Ausgabeeinheiten, die eine hohe Schutzart, beispielsweise IP67 aufweisen müssen, ist der gesenkte Energieverbrauch und damit verbunden eine geringere Abwärme von großer Bedeutung.

Vorteilhafterweise stellt das erfindungsgemäße Verfahren darüber hinaus keine zusätzlichen Anforderungen an die einkanalige Datenübertragungsstrecke, so dass alle gängigen Bussysteme verwendet werden können. Bestehende Systeme können auf diese Weise einfach umgerüstet bzw. erweitert werden.

Insgesamt können durch das neue Verfahren die Kosten gegenüber bestehenden Lösungen gesenkt werden, da ein sicheres Abschalten auch für hohen Sicherheitsstufen der eingangsgenannten Normen gewährleistet werden kann, ohne dass eine redundante Verkabelung, zusätzliche sicherheitsgerichtete Einrichtungen mit lokalen sicheren Ausgängen oder vollständig mehrkanalig redundante Ausgabeeinheiten verwendet werden müssen.

Die zuvor genannte Aufgabe ist somit vollständig gelöst.

In einer weiteren Ausgestaltung weist die Freigabe einen variablen Code auf und die zweite Verarbeitungseinheit erzeugt das dynamische Taktsignal in Abhängigkeit des variablen Codes.

In dieser Ausgestaltung wird über die Freigabe eine zusätzliche Information in Form eines variablen Codes übertragen. Vorzugsweise kann der variable Code mindestens zwei Zustände kodieren, die von der zweiten Verarbeitungseinheit erkannt werden können. Je nachdem, welchen Zustand der variable Code anzeigt, ist die zweite Verarbeitungseinheit dazu ausgebildet das dynamische Taktsignal zu erzeugen. Vorteilhafterweise kann die Steuereinheit auf diese Weise unabhängig von der ersten Verarbeitungseinheit der zweiten Verarbeitungseinheit signalisieren, welchen Zustand die sicheren Ausgänge einnehmen sollen.

In einer besonders bevorzugten Ausgestaltung ist der variable Code Teil einer vordefinierten Codefolge mit festgelegter Reihenfolge.

Diese Ausgestaltung hat den Vorteil, dass die Freigabe in einer kontinuierlichen Folge von einzelnen Codes übertragen wird. Die Reihenfolge kann dabei beispielsweise durch einen inkrementellen Zähler realisiert werden, der mit dem variablen Code übertragen wird und anzeigt, an welcher Position innerhalb der Codefolge der Code angeordnet ist. Eine Unterbrechung der Codefolge bzw. eine Veränderung der Reihenfolge kann von der zweiten Verarbeitungseinheit erkannt werden und führt zum Abschalten der Ausgänge, indem die zweite Verarbeitungseinheit das dynamische Taktsignal aussetzt. Auf diese Weise kann das Aktivieren der sicheren Ausgänge mit einer weiteren Bedingung verknüpft werden.

In einer weiteren bevorzugten Ausgestaltung stellt die zweite Verarbeitungseinheit in Abhängigkeit des variablen Codes das dynamische Taktsignal für eine definierte Zeitspanne bereit.

In dieser Ausgestaltung werden die Anforderungen an die Bereitstellung des dynamischen Taktsignals weiter erhöht. Das dynamische Taktsignal wird von der zweiten Verarbeitungseinheit nur dann erzeugt, wenn ein Code regelmäßig, d.h. innerhalb eines festgelegten Intervalls bei der zweiten Verarbeitungseinheit eintrifft. Auf diese Weise wird erreicht, dass die Freigabe kontinuierlich von der übergeordneten Steuereinheit bestätigt werden muss. Bleibt eine Bestätigung aus, schaltet die Ausgabeeinheit die sicheren Ausgänge ab, da kein dynamisches Taktsignal erzeugt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer erfindungsgemäßen Vorrichtung als Blockschaltbild,
- Fig. 2: eine schematische Darstellung eines bevorzugten Ausführungsbeispiels einer Steuereinheit,
- Fig. 3: eine schematische Darstellung eines bevorzugten Ausführungsbeispiels einer Ausgabeeinheit,
- Fig. 4: eine schematische Darstellung einer bevorzugten Ausführung einer Codefolge zur Übertragung einer Freigabe, und
- Fig. 5: eine perspektivische Darstellung eines Ausführungsbeispiels eines Anschlussmoduls.

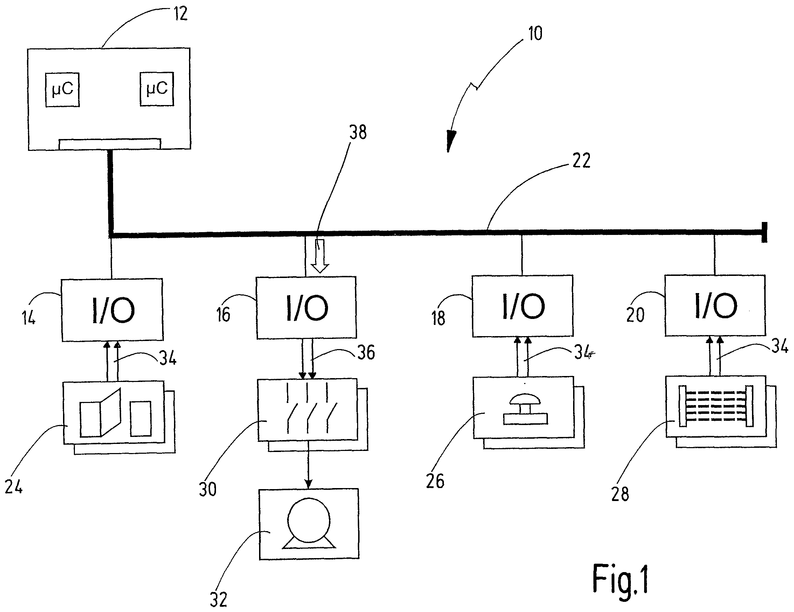

In Fig. 1 ist ein Ausführungsbeispiel einer erfindungsgemäßen Vorrichtung in seiner Gesamtheit mit der Bezugsziffer 10 bezeichnet.

Die Vorrichtung 10 weist eine Steuereinheit 12 auf, an die hier beispielhaft vier E/A-Einheiten 14, 16, 18, 20 angeschlossen sind. Die Steuereinheit ist bspw. eine fehlersichere SPS, wie sie von der Anmelderin der vorliegenden Erfindung unter der Bezeichnung PSS® vertrieben wird.

Die E/A-Einheiten 14 - 20 sind von der Steuereinheit 12 räumlich abgesetzt und über eine einkanalige Datenübertragungsstrecke 22 mit dieser verbunden. Bei der Datenübertragungsstrecke 22 kann es sich um einen gewöhnlichen Feldbus handeln. Einkanalig bedeutet in diesem Zusammenhang, dass die Datenübertragungsstrecke 22 selbst keine redundanten Hardwarekomponenten, insbesondere keine redundante Verkabelung aufweist, die eine sicherheitskritische Übertragung von Signalen ermöglichen. Bevorzugt handelt es sich bei der Datenübertragungsstrecke 22 um eine Ethernet-Datenverbindung auf Basis eines handelsüblichen Ethernet-Protokolls.

Die E/A-Einheiten 14 - 20 sind im Vergleich zur mehrkanaligen Steuereinheit 12 einfache Einheiten mit Ein- und/oder Ausgängen, die im Wesentlichen zur Signalaufnahme und/oder -ausgabe, d.h. zum Auslesen von Sensoren und zum Ansteuern von Aktoren dienen. Beispielhaft für den typischen Anwendungsfall sind als Sensoren mehrere Schutztüren 24, Not-Aus-Schalter 26 sowie Lichtgitter 28 dargestellt. Als Aktoren sind hier Schütze 30 angedeutet, die üblicherweise die Stromzufuhr zu einer zu überwachenden Maschine 32 unterbrechen können. Gemäß dem Ausführungsbeispiel nach Fig. 1 sind separate Einheiten für Aus- und Eingänge vorgesehen. Abweichend von dieser vereinfachten Darstellung können die E/A-Einheiten 14 - 20 jedoch auch kombinierte Ein- und Ausgabeeinheiten sein.

Ein Abbild der Signalzustände der Ein- und Ausgänge der E/A-Einheiten 14 - 20 wird als Prozessdaten bezeichnet. Die Prozessdaten werden vorzugsweise zyklisch zwischen den E/A-Einheiten 14 - 20 und der Steuereinheit 12 ausgetauscht. Im vorliegend Ausführungsbeispiel wertet die Steuereinheit 12 bspw. die von den Sensoren 24, 26, 28 über die Eingabeeinheiten 14, 18, 20 aufgenommenen Eingangssignale 34 aus und stellt über die Ausgabeeinheit 16 entsprechende Ausgangssingale 36 zum Ansteuern der Aktoren 30 bereit. Neben der hier gezeigten Ausgabeeinheit 16 können in anderen Ausführungsbeispielen auch mehrere Ausgabeeinheiten an die einkanalige Datenübertragungstrecke angeschlossen sein. Ebenso ist die Reihenfolge, in der die E/A-Einheiten angeordnet sind, nur exemplarisch. Die Zuordnung von Eingangssignalen 34 zu den Ausgängen erfolgt durch in der Steuereinheit 12.

Für sicherheitskritische Anwendungen ist eine fehlerfreie Übertragung der Prozessdaten über die einkanalige Datenübertragungstrecke 22 zu gewährleisten. Insbesondere müssen Fehler wie Verlust, Wiederholung, Verfälschung, Einfügung und Abänderung der Reihenfolge ausgeschlossen werden, um sicherzustellen, dass ein von einem Sensor aufgenommenes Signal zu einer entsprechenden Änderung an den Aktoren führt. Im Ausführungsbeispiel nach Fig. 1 sind hierzu die Steuereinheit 12 und die E/A-Einheiten 14 - 20 aufeinander so eingestellt, dass auch bei Fehlern auf der Datenübertragungstrecke 22 die zu überwachende Maschine 32 sicher abgeschaltet wird.

Eingangsseitig werden hierzu die Signale 34 von den E/A-Einheiten 14 - 20 zu der Steuereinheit 12 beispielsweise im Wege einer diversitären Mehrfachübertragung übertragen, d.h. in einem bevorzugten Ausführungsbeispiel werden die Daten einmal im Klartext und ein zweites Mal in einer durch die Steuereinheit 12 festgelegten codierten Form übertragen. Da die Steuereinheit 12 die Codierung in diesem Ausführungsbeispiel vorgibt, kann auf diese Weise ein fehlersicheres Einlesen der Eingangssignale der Sensoren über die Datenübertragungstrecke 22 ermöglicht werden. Die oben genannten Fehler bei der Übertragung können auf diese Weise zumindest eingangsseitig beherrscht werden. Alternative kann jedoch auch eine andere sichere Übertragungsart für das Einlesen der Eingangssignale 34 über die einkanalige Datenübertragungsstrecke 22 zur Anwendung kommen.

Gemäß einem Aspekt der vorliegenden Erfindung findet die ausgangseitige Ansteuerung der Aktoren 30 hier ebenfalls nur über die einkanalige Datenübertragungsstrecke 22 statt. Hierzu erzeugt die Steuereinheit 12 in Abhängigkeit eines oder mehrerer Eingangssignale 34 eine Freigabe 38 in Form eines digitalen Steuerbefehls, die über die einkanalige Datenübertragungsstrecke an die Ausgabeeinheit 16 übermittelt wird. Die Ausgabeeinheit 16 weist eine erste und eine zweite Verarbeitungseinheit auf, die voneinander verschiedene Signalverarbeitungsschritte ausführen. Die erste Verarbeitungseinheit verarbeitet den digitalen Steuerbefehl der Freigabe 38 auf logischer Ebene und erzeugt in Abhängigkeit von der Freigabe 38 ein Ausgangsignal, mit dem die Schütze 30, allgemeiner die Aktoren, ein- oder ausgeschaltet werden können. In einigen Ausführungsbeispielen kann die erste Verarbeitungseinheit 40 weitere Steuerbefehle bei der logischen Verarbeitung des Steuerbefehls aus der Freigabe 38 berücksichtigen, wie etwa einen weiteren Steuerbefehl von einer anderen Steuereinheit (hier nicht dargestellt) der Vorrichtung 10 oder einen lokal erzeugten Steuerbefehl. Außerdem stellt die erste Verarbeitungseinheit 40 die Freigabe der zweiten Verarbeitungseinheit 42 zur Verfügung. Die zweite Verarbeitungseinheit erzeugt in nachfolgend näher beschriebener Weise für einen definierten Zeitraum ein dynamisches Taktsignal, wenn die Freigabe 38 zeitlich aktuell ist. In vorteilhaften Ausführungsbeispielen wertet die zweite Verarbeitungseinheit den Steuerbefehl in der Freigabe 38 nicht inhaltlich aus, sondern überprüft lediglich die Aktualität der über die Datenübertragungsstrecke 22 empfangenen Freigabe 38. Sowohl das Ausgangssignal der ersten Verarbeitungseinheit 40 als auch das dynamische Taktsignal der zweiten Verarbeitungseinheit 42 müssen vorliegen, damit die Aktoren 30 eine gefährliche Anlage einschalten können. Nur wenn beide Signale vorliegen, werden daher die sicheren Ausgänge der Ausgabeeinheit aktiviert. Da aus der Freigabe zwei unabhängige Ausgangssignale erzeugt werden, können die oben genannten Übertragungsfehler hinsichtlich eines sicheren Abschaltens beherrscht werden. Ein zusätzlicher Abschaltpfad bzw. lokale sichere Ausgänge werden nicht benötigt.

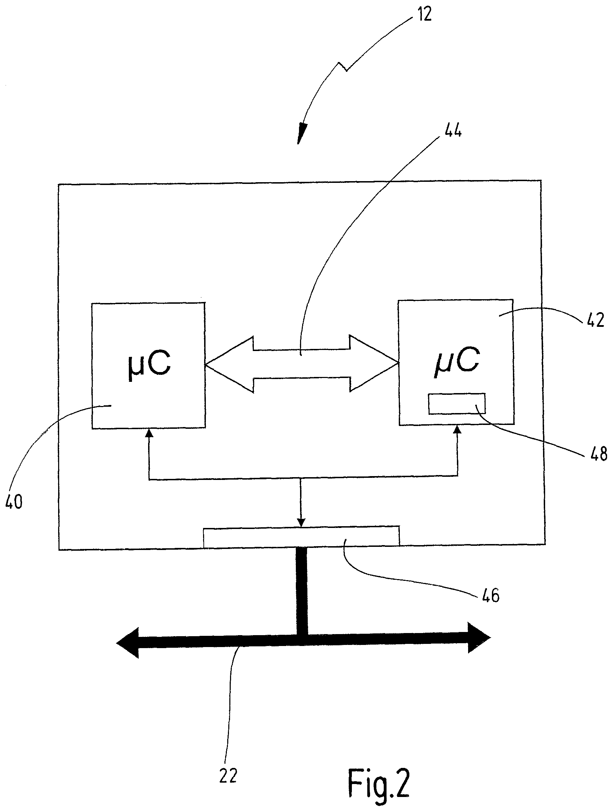

Anhand der Fig. 2, 3 und 4 werden im Folgenden bevorzugte Ausführungsbeispiele einer Steuereinheit 12, einer Ausgabeeinheit 16 sowie einer Freigabe 38 im Sinne der Erfindung näher erläutert. Gleiche Bezugszeichen bezeichnen dabei gleiche Teile wie im Ausführungsbeispiel nach Fig. 1.

Fig.2 zeigt schematisch ein Ausführungsbeispiel einer Steuereinheit 12. Die Steuereinheit 12 ist hier mehrkanalig redundant aufgebaut und sie verarbeitet alle Eingangsdaten der Sensoren 24, 26, 28 vollständig redundant, um die erforderliche Eigenfehlersicherheit zu gewährleisten. Vereinfacht für die redundanten Signalverarbeitungskanäle sind hier zwei Mikrocontroller 40, 42 dargestellt, die im Wesentlichen dieselben Verarbeitungsschritte ausführen, über eine Verbindung 44 Ergebnisse austauschen und sich somit gegenseitig kontrollieren können. Die Verbindung 44 kann beispielsweise als Dualport-RAM, aber auch in jeder anderen Art und Weise realisiert sein. In einem bevorzugten Ausführungsbeispiel sind die Mikrocontroller 40, 42 von unterschiedlicher Bauart, wie es hier durch die kursive Beschriftung des zweiten Mikrocontollers 42 angedeutet ist. Durch die unterschiedliche Bauart kann bei gleichem Funktionsumfang ein systematischer Fehler in den einzelnen Verarbeitungskanälen ausgeschlossen werden.

Die Steuereinheit 12 weist ferner eine Kommunikationsschnittstelle 46 auf, über die die Mikrocontroller 40, 42 auf die Datenübertragungsstrecke 22 zugreifen können. Vorzugsweise handelt es sich bei der Kommunikationsschnittstelle 46 um einen Protokollchip, welcher das entsprechende Protokoll für eine zyklische Datenübertragung über die einkanalige Datenübertragungsstrecke implementiert.

Die Steuereinheit 12 ist dazu ausgebildet, Eingangssignale über die einkanalige Datenübertragungsstrecke 22 kontinuierlich einzulesen und mittels der Mikrocontroller 40, 42 mehrkanalig-redundant auszuwerten. In Abhängigkeit von der Auswertung erzeugen beide Mikrocontroller 40, 42 zyklisch Steuerbefehle für die Aktoren. Ein solcher Steuerbefehl kann eine Freigabe zum Einschalten einer gefährlichen Bewegung der Maschine 32 repräsentieren, wenn die Eingangssignale der Sensoren 24, 26, 28 einen sicheren Zustand anzeigen. Die Freigabe 38 wird, wie gewöhnliche Prozessdaten, über die einkanalige Datenübertragungsstrecke zu den Ausgabeeinheiten übertragen. In einem bevorzugten Ausführungsbeispiel ist die Freigabe ein Datenwort mit einer definierten Anzahl von Bits, welches zyklisch wiederkehrend an die Ausgabeeinheit 16 übertragen wird.

Im bevorzugten Ausführungsbeispiel nach Fig. 2 verfügt die Steuereinheit 12 weiterhin über eine Codiereinheit 48, die dazu ausgebildet ist, die Freigabe 38 mit jedem Verarbeitungszyklus so zu manipulieren, dass deren Aktualität von Ausgabeeinheit 16 sehr schnell und einfach überprüft werden kann. Beispielsweise könnte eine erste Bitfolge einen ersten Zustand und eine zweite von der ersten verschiedene Bitfolge einen zweiten Zustand anzeigen. Alternativ oder ergänzend könnte die Codiereinheit 48 den zyklisch übertragenen Freigaben eine vordefinierte Reihenfolge einprägen, indem beispielsweise ein Zähler innerhalb des Datentelegramms inkrementell erhöht wird. Vorzugsweise wird mit jedem Datentelegramm, welches eine Freigabe übermittelt, eine zum vorherigen Datentelegramm unterschiedliche Freigabe übertragen, wobei sich die vordefinierte Reihenfolge aus den einzelnen Freigaben bestimmen lässt. Die Codiereinheit 48 kann, wie in Fig. 2 gezeigt, in einem der beiden Mikrocontroller als Software- oder Hardwarekomponente integriert sein. Alternative kann die Kodierung auch in beiden Mikrocontrollern oder durch eine separate Komponente erfolgen.

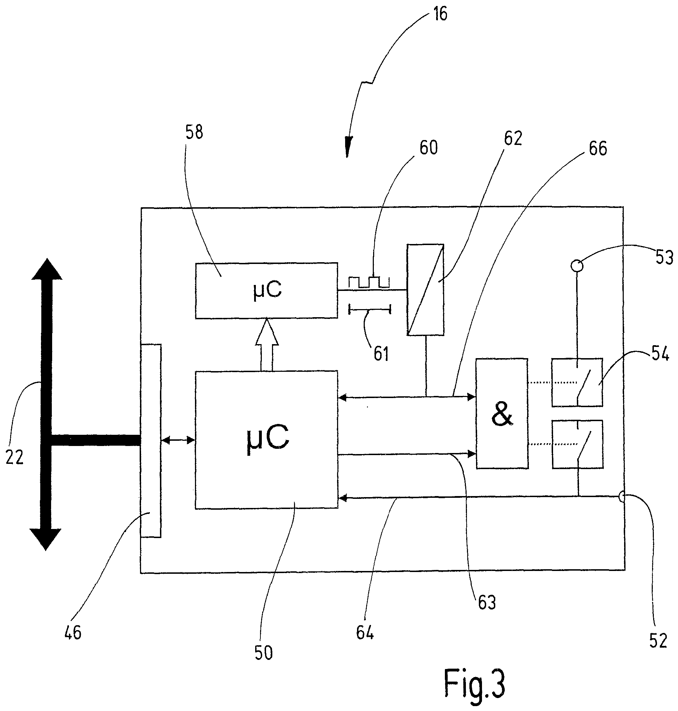

Fig. 3 zeigt anhand der E/A-Einheit 16 ein vorteilhaftes Ausführungsbeispiel einer Ausgabeeinheit 16. Die Ausgabeeinheit weist hier ebenso wie die Steuereinheit 12 eine Kommunikationsschnittstelle 46 auf, über die eine erste Verarbeitungseinheit 50 auf die Datenübertragungstrecke 22 zugreifen kann. Alternativ kann die Kommunikationsschnittstelle 46 auch in die erste Verarbeitungseinheit 50 integriert sein. In bevorzugten Ausführungsbeispielen ist bei der Ausgabeeinheit 16 nur eine Verarbeitungseinheit mit der Datenübertragungsstrecke 22 direkt verbunden und kommuniziert mit der Steuereinheit 12.

Im vorliegenden Ausführungsbeispiel empfängt die erste Verarbeitungseinheit 50, die beispielsweise als Mikrocontroller, ASIC oder FPGA ausgebildet sein kann, zyklisch die Freigabe 38 und wertet diese inhaltlich aus. Dies bedeutet, dass die erste Verarbeitungseinheit 50 den in der Freigabe 38 enthaltenen Steuerbefehl logisch interpretiert und in Abhängigkeit davon - und ggf. in Abhängigkeit von weiteren Informationen - ein analoges Ausgangssignal 36 zum Ansteuern eines Ausgangs 52 erzeugt. Die weiteren Informationen können vorteilhaft Steuerbefehle von einer weiteren Steuereinheit (hier nicht dargestellt) in der Gesamtanlage sein. Ferner können die weiteren Informationen in vorteilhaften Ausführungsbeispielen Eingangsinformationen von Sensoren sein, die lokal im Bereich der Ausgabeeinheit 16 vorliegen. Dies kann insbesondere der Fall sein, wenn die Ausgabeeinheit 16 eine kombinierte Ein- und Ausgabeeinheit ist, die sowohl Eingangssignale von Sensoren einliest als auch Aktoren ansteuert.

Die erste Verarbeitungseinheit 50 stellte hier darüber hinaus über eine interne Verbindung 56 die Freigabe 38 einer zweiten Verarbeitungseinheit 58 zur Verfügung. Bei der internen Verbindung 56 handelt es sich hier um eine Einwegverbindung, bei der nur Daten von der ersten Verarbeitungseinheit 50 zur zweiten Verarbeitungseinheit 58 übertragen werden. In den bevorzugten Ausführungsbeispielen kann die zweite Verarbeitungseinheit daher keine Daten über die Datenübertragungsstrecke versenden. Die zweite Verarbeitungseinheit 58 ist vorzugweise ebenfalls ein Mikrocontroller, ein ASIC, FPGA oder ein sonstiger Signalverarbeitungsbaustein, der jedoch im Vergleich zur ersten Verarbeitungseinheit 50 einen reduzierten Funktionsumfang aufweist. In einer bevorzugten Ausführung handelt es sich um einen Kleinstcontroller mit lediglich einem Eingang, einer CPU und einem Ausgang. Der Eingang kann eine einfache UART-Schnittstelle sein, über welche die zweite Verarbeitungseinheit 58 die Freigabe 38 von der ersten Verarbeitungseinheit 50 empfängt, während der Ausgang ein einfacher digitaler Ausgang sein kann, über den ein dynamisches Taktsignal 60 bereitgestellt wird. In einem besonders bevorzugten Ausführungsbeispiel wird das dynamische Taktsignal 60 nach Empfangen der Freigabe 38 nur für eine begrenzte definierte Zeitspanne 61 erzeugt. Empfängt die zweite Verarbeitungseinheit 58 in dieser Zeitspanne keine weitere gültige Freigabe 38 wird das dynamische Taktsignal ausgesetzt. Auf diese Weise kann sichergestellt werden, dass die Freigabe kontinuierlich von der Steuereinheit 12 bestätigt werden muss. In den bevorzugten Ausführungsbeispielen ist die begrenzte Zeitspanne 61 etwas länger als die Zykluszeit T, mit der die Steuereinheit 12 die Eingangssignale einliest und die zyklische Freigabe 38 erzeugt, und ferner kleiner als das Doppelte dieser Zykluszeit T.

Die zweite Verarbeitungseinheit 58 überprüft so im Wesentlichen die Aktualität der Freigabe 38. In den bevorzugten Ausführungsbeispielen wertet sie jedoch nicht den logischen Steuerbefehl in der Freigabe 38 aus. Sie arbeitet damit unabhängig von der ersten Verarbeitungseinheit 50, welche im Wesentlichen die logische Auswertung der Freigabe 38 und insbesondere die logische Verarbeitung des Steuerbefehls in der Freigabe 38 übernimmt. Liegt eine aktuelle und damit gültige Freigabe vor, erzeugt die zweite Verarbeitungseinheit 58 das dynamisches Taktsignal 60 für die begrenzte Zeitspanne 61.

Vorzugsweise wertet die zweite Verarbeitungseinheit 58 von der Steuereinheit 12 mit der Freigabe 38 übertragene Metadaten aus, die einen laufenden Zählerstand oder ein anderes zyklisch wechselndes Datum beinhalten. Im vorliegenden Ausführungsbeispiel ist eine Freigabe 38 demnach nur gültig, wenn die Freigabe 38 einen definierten Zustand repräsentiert und einer vordefinierten Erwartung der zweiten Verarbeitungseinheit 58 entspricht. Nur bei einer aktuellen Freigabe 38 wird das dynamische Taktsignal 60 erzeugt und über ein Konverter-Element 62 mit dem ersten Ausgangssignal 36 verknüpft, wie hier durch das logische UND-Symbol angedeutet ist. Das Konverter-Element 62 ist vorzugsweise ein Gleichrichter, der aus dem dynamischen Taktsignal 60 ein konstantes analoges Signal erzeugt, welches mit dem Ausgangsignal 63 der ersten Verarbeitungseinheit 50 verknüpft wird.

Über das verknüpfte Signal der ersten und zweiten Verarbeitungseinheit 50, 58 wird der sichere Ausgang 52 aktiviert. Das verknüpfte Signal steuert in diesem Ausführungsbeispiel zwei Schaltelemente 54, die eine Stromversorgung 53 mit den sicheren Ausgang 52 verbinden. Wenn die Schaltelemente geschlossen sind, d.h. sowohl das Ausgangssignal der ersten Verarbeitungseinheit und das dynamische Taktsignal der zweiten Verarbeitungseinheit anliegt, ist der sichere Ausgang 52 bestromt und ein angeschlossenen Aktor aktiv. In Fig. 3 ist nur ein sicherer Ausgang 52 dargestellt. Alternativ können auch eine Vielzahl von parallelen Ausgängen auf diese Weise angesteuert werden.

Die Ausgabeeinheit 16 ist in diesem bevorzugten Ausführungsbeispiel weiterhin dazu ausgebildet, die erzeugten Ausgangssignale zurück zu lesen. Vorzugsweise erfolgt dies allein mit Hilfe der ersten Verarbeitungseinheit 50. Im Ausführungsbeispiel sind Eingänge der ersten Verarbeitungseinheit 50 einerseits über eine erste Rückleseleitung 64 mit dem sicheren Ausgang 52 und andererseits über eine zweite Rückleseleitung 66 mit dem Ausgang des Konverter-Elements 62 verbunden. Die rückgelesenen Werte werden in einigen Ausführungsbeispielen wie Eingangssignale an die Steuereinheit 12 übertragen. Die Steuereinheit 12 kann in diesen Ausführungsbeispielen anhand der rückgelesenen Werte die Funktionsfähigkeit der einzelnen Komponenten innerhalb der Ausgabeeinheit 16 prüfen. Hierzu führt die Steuereinheit 12 vorzugsweise zyklische Abschalttests durch, indem sie kurzeitig die Freigabe 38 ändert oder aussetzt. Anhand der rückgelesenen Werte erkennt die Steuereinheit 12, ob ein entsprechender Zustandswechsel in den beiden Freigabepfaden eingetreten ist oder nicht.

Alternativ oder ergänzend hierzu kann die erste Verarbeitungseinheit 50 die Rücklesesignale 64, 66 selbst auswerten und insbesondere mit dem jeweiligen Steuerbefehl aus der zyklisch übertragenen Freigabe 38 logisch verknüpfen.

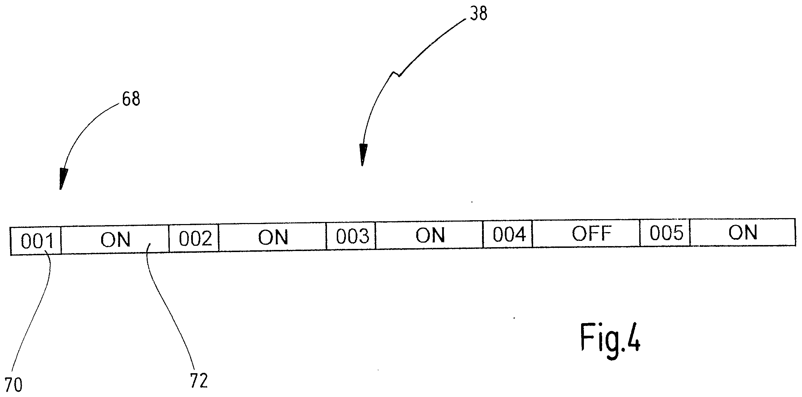

Fig. 4 zeigt schematisch ein Ausführungsbeispiel einer zyklisch wiederholt übertragenen Freigabe 38. Die Freigabe 38 ist vorzugsweise ein Datentelegramm, welches zyklisch in einem oder mehreren Paketen an die Ausgabeeinheiten 16 übertragen wird. Die Übertragung unterscheidet sich in den bevorzugten Ausführungsbeispielen nicht von der Übertragung anderer Prozessdaten. Für die zyklische Übertragung ist die Freigabe 38 hier in eine Folge von Datenworten dargestellt. Ein Datenwort 68 setzt sich in diesen Ausführungsbeispiel aus einem erstem Teil 70 und einem zweiten Teil 72 zusammen. Der erste Teil 70 enthält in diesem Ausführungsbeispiel einen Zählerstand, der inkrementell mit jedem Datentelegramm erhöht wird. Auf diese Weise wird eine vordefinierte Reihenfolge festgelegt, die auf Empfängerseite, insbesondere in der zweiten Verarbeitungseinheit 58, einfach rekonstruiert und überprüft werden kann. Der zweite Teil 72 codiert in diesem Ausführungsbeispiel einen Steuerbefehl für den Aktor an der Ausgabeeinheit 16. Im den ersten Telegrammen lautet der Steuerbefehl hier ON und im vierten Telegramm OFF.

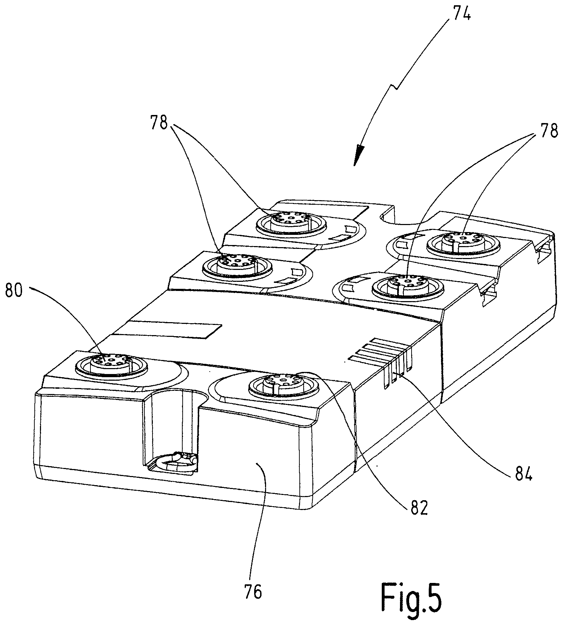

Fig. 5 zeigt abschließend ein besonders bevorzugtes Ausführungsbeispiel einer E/A-Einheit, bei dem Eingabe- und Ausgabeeinheiten 14, 16 in einer funktionalen Baugruppe 74 zusammengefasst sind. Die Eingabe- und Ausgabeeinheiten sind hier in einem wasserdichten Gehäuse 76 nach Schutzart IP 67 integriert. Über Steckerbuchsen 78 sind die jeweiligen Anschlüsse für die Ein- und Ausgänge herausgeführt. Weitere Anschlüsse 80, 82 sind für die Verbindung mit der Datenübertragungsstrecke vorgesehen.

Sensoren und Aktoren werden vorzugsweise über vorkonfektionierte Kabel mit dem Baugruppe 74 verbunden. Die Datenübertragungsstrecke 22 wird über einen ersten Busanschluss 80 und einen zweiten Busanschluss 82 durchgeschleift, so dass eine Vielzahl von Anschlussmodulen 74 in Serie zu der Datenübertragungsstrecke 22 zusammengeschlossen werden können. Das Baugruppe 74 ist besonders kompakt aufgebaut und vorzugsweise aufgrund der Schutzart IP67 für eine freie Montage im Feld außerhalb von Schaltschränken geeignet. Zusätzliche Anzeigen 84, bspw. in Form von LEDs, können den jeweiligen Zustand der Ein- und Ausgänge unmittelbar an der Baugruppe 74 anzeigen.

## Patentansprüche

1. Verfahren zum sicheren Abschalten einer elektrischen Last, mit den Schritten:
- Bereitstellen einer mehrkanaligen Steuereinheit (12), einer einkanaligen Datenübertragungsstrecke (22) und einer Ausgabeeinheit (16) mit einer ersten und einer zweiten Verarbeitungseinheit (50, 58) sowie mit sicheren Ausgängen (52);
- Einlesen und Auswerten eines Eingangssignals (34) durch die mehrkanalige Steuereinheit (12) sowie Erzeugen einer Freigabe (38) in Abhängigkeit der Auswertung;
- Übertragen der Freigabe (38) über die einkanalige Datenübertragungsstrecke (22) zur Ausgabeeinheit (16);
- Empfangen der Freigabe (38) durch die erste Verarbeitungseinheit (50) und Erzeugen eines Ausgangsignals (63) in Abhängigkeit von der Freigabe (38);
- Bereitstellen von zumindest einem Teil der Freigabe (38) von der ersten Verarbeitungseinheit (50) zur Auswertung durch die zweite Verarbeitungseinheit (58);
**gekennzeichnet durch**
- Erzeugen eines vom Ausgangssignal (63) unabhängigen dynamischen Taktsignals (60) durch die zweite Verarbeitungseinheit (58) in Abhängigkeit von der Freigabe (38);
- Bereitstellen des dynamischen Taktsignals (60) von der zweiten Verarbeitungseinheit (58) an einen Gleichrichter (62), der aus dem dynamischen Taktsignal (60) ein konstantes analoges Signal erzeugt; und
- Verknüpfen des konstanten analogen Signals mit dem Ausgangssignal (63) und Aktivierung der sicheren Ausgänge (52) nur wenn sowohl das Ausgangssignal (63) als auch das konstante analoge Signal vorliegen.

2. Verfahren nach Anspruch 1, mit den zusätzlichen Schritten :
- Erzeugen eines Rücklesetelegramms durch die erste Verarbeitungseinheit (50) in Abhängigkeit des Ausgangssignals und des dynamischen Taktsignals (60),
- Übertragen des Rücklesetelegrams über die einkanalige Datenübertragungsstrecke (22) an die mehrkanalige Steuereinheit (12).

3. Verfahren nach einem der Ansprüche 1 oder 2, wobei die Freigabe (38) einen variablen Code (70) aufweist und die zweite Verarbeitungseinheit (58) das dynamische Taktsignal (60) in Abhängigkeit des variablen Codes (70) erzeugt.

4. Verfahren nach Anspruch 3, wobei der variable Code (70) Teil einer vordefinierten Codefolge mit festgelegter Reihenfolge ist.

5. Verfahren nach einem der Ansprüche 3 oder 4, wobei die zweite Verarbeitungseinheit (58) in Abhängigkeit des variablen Codes (70) das dynamische Taktsignal (60) für eine definierte Zeitspanne (61) bereitstellt.

6. Ausgabeeinheit (16) zum sicheren Abschalten einer elektrischen Last mit einer ersten und einer zweiten Verarbeitungseinheit (50, 58) sowie sicheren Ausgängen (52), wobei die erste Verarbeitungseinheit (50) dazu ausgebildet ist, in Abhängigkeit einer Freigabe (38) ein Ausgangsignal (63) zu erzeugen und ferner die Freigabe (38) zumindest teilweise der zweiten Verarbeitungseinheit (58) zur Auswertung bereitzustellen, **dadurch gekennzeichnet, dass** die zweite Verarbeitungseinheit (58) dazu ausgebildet ist, ein vom Ausgangssignal (63) unabhängiges dynamisches Taktsignal (60) in Abhängigkeit von der Freigabe (38) zu erzeugen und einem Gleichrichter (62) bereitzustellen, der dazu ausgebildet ist, aus dem dynamischen Taktsignal (60) ein konstantes analoges Signal zu erzeugen; und dass die die Ausgabeeinheit (16) dazu ausgebildet ist, das konstante analoge Signal mit dem Ausgangssignal (63) zu verknüpfen und die sicheren Ausgänge (52) nur zu aktivieren, wenn sowohl das Ausgangssignal (63) als auch das konstante analoge Signal vorliegen.

7. Vorrichtung (10) mit einer Ausgabeeinheit (16) nach Anspruch 6 mit einer mehrkanaligen Steuereinheit (12) zum Einlesen und Auswerten eines Eingangssignals (34) und einer einkanaligen Datenübertragungsstrecke (22),
wobei die mehrkanalige Steuereinheit (12) mit der Ausgabeeinheit (16) über die einkanaligen Datenübertragungsstrecke (22) verbunden und dazu ausgebildet ist, eine Freigabe (38) in Abhängigkeit des Eingangssignals (34) zu erzeugen, und
wobei die einkanalige Datenübertragungsstecke (22) dazu ausgebildet ist, die Freigabe (38) von der Steuereinheit (12) zur Ausgabeeinheit (16) zu übertragen.

## Claims

1. A method for safely disconnecting an electrical load, comprising the steps
- Providing a multi-channel control unit (12), a single-channel data transmission link (22) and an output unit (16) with a first and a second processing unit (50, 58) and with safe outputs (52);
- Receiving and evaluating of an input signal (34) by the multi-channel control unit (12) and generation of an enable signal (38) depending on the evaluation;
- Transmitting of the enable signal (38) via the single-channel data transmission link (22) to the output unit (16);
- Receiving the enable signal (38) by the first processing unit (50) and generating an output signal (63) in response to the enable signal (38);
- Providing at least a portion of the enable signal (38) from the first processing unit (50) for evaluation by the second processing unit (58)
**characterised by**
- Generating a dynamic clock signal (60) independent of the output signal (63) by the second processing unit (58) based on the enable signal (38);
- Providing the dynamic clock signal (60) from the second processing unit (58) to a rectifier (62) that generates a constant analog signal from the dynamic clock signal (60); and
- Linking the constant analog signal with the output signal (63) and activating the safe outputs (52) only if both the output signal (63) and the constant analog signal are present.

2. The method according to claim 1, with the further steps :
- Generating a read-back telegram by the first processing unit (50) based on the output signal and the dynamic clock signal (60)
- Transmitting the read-back telegram via the single-channel data transmission link (22) to the multi-channel control unit (12).

3. The method according to claim 1 or 2, wherein the enable signal (38) has a variable code (70) and the second processing unit (58) generates the dynamic clock signal (60) based on the variable code (70).

4. The method according to claim 3, wherein the variable code (70) is part of a predefined code sequence with a fixed order.

5. The method according to claim 3 or 4, wherein the second processing unit (58) provides the dynamic clock signal (60) for a defined period of time (61) based on the variable code (70).

6. Output unit (16) for the safe disconnection of an electrical load, having a first and a second processing unit (50, 58) and safe outputs (52), the first processing unit (50) being configured to generate an output signal (63) based on an enable signal (38) and also to provide the enable signal (38) at least partially to the second processing unit (58) for evaluation, **characterized in that** the second processing unit (58) is configured to generate a dynamic clock signal (60) independent of the output signal (63) based on the enable signal (38) and to provide it to a rectifier (62), which is configured to generate a constant analog signal from the dynamic clock signal (60); and **in that** the output unit (16) is configured to link the constant analog signal with the output signal (63) and to activate the safe outputs (52) only when both the output signal (63) and the constant analog signal are present.

7. An apparatus (10) with an output unit (16) according to claim 6 having a multi-channel control unit (12) for receiving and evaluating an input signal (34) and a single-channel data transmission path (22),
wherein the multi-channel control unit (12) is connected to the output unit (16) via the single-channel data transmission path (22) and is configured to generate an enable signal (38) based on the input signal (34), and
wherein the single-channel data transmission link (22) is configured to transmit the enable signal (38) from the control unit (12) to the output unit (16).

## Revendications

1. Procédé de désactivation sécurisée d'une charge électrique, le procédé comprenant les étapes suivantes :
- fournir une unité de commande multicanaux (12), une section de transmission de données monocanal (22) et une unité de sortie (16) comportant une première et une deuxième unité de traitement (50, 58) et des sorties sécurisées (52) ;
- lire et évaluer un signal d'entrée (34) au moyen de l'unité de commande multicanaux (12) et générer une autorisation (38) en fonction de l'évaluation ;
- transmettre l'autorisation (38) à l'unité de sortie (16) sur la section de transmission de données monocanal (22) ;
- recevoir l'autorisation (38) au moyen de la première unité de traitement (50) et générer un signal de sortie (63) en fonction l'autorisation (38) ;
- fournir au moins une partie de l'autorisation (38) de la première unité de traitement (50) en vue de l'évaluation au moyen de la deuxième unité de traitement (58) ;
**caractérisé par** les étapes suivantes
- générer un signal d'horloge dynamique (60) indépendant du signal de sortie (63) au moyen de la deuxième unité de traitement (58) en fonction de l'autorisation (38) ;
- fournir le signal d'horloge dynamique (60) provenant de la deuxième unité de traitement (58) à un redresseur (62) qui génère un signal analogique constant à partir du signal d'horloge dynamique (60) ; et
- combiner le signal analogique constant au signal de sortie (63) et activer les sorties sécurisées (52) uniquement lorsque le signal de sortie (63) et le signal analogique constant sont présents.

2. Procédé selon la revendication 1, comprenant les étapes supplémentaires suivantes :
- générer un télégramme de relecture au moyen de la première unité de traitement (50) en fonction du signal de sortie et du signal d'horloge dynamique (60),
- transmettre le télégramme de relecture sur la section de transmission de données monocanal (22) à l'unité de commande multicanaux (12).

3. Procédé selon l'une des revendications 1 et 2, l'autorisation (38) comportant un code variable (70) et la deuxième unité de traitement (58) générant le signal d'horloge dynamique (60) en fonction du code variable (70).

4. Procédé selon la revendication 3, le code variable (70) faisant partie d'une séquence de codes prédéfinie ayant un ordre spécifié.

5. Procédé selon l'une des revendications 3 et 4, la deuxième unité de traitement (58) fournissant le signal d'horloge dynamique (60) pendant une durée définie (61) en fonction du code variable (70).

6. Unité de sortie (16) destinée à la désactivation sécurisée d'une charge et comprenant des première et deuxième unités de traitement (50, 58) et des sorties sécurisées (52), la première unité de traitement (50) étant conçue pour générer un signal de sortie (63) en fonction d'une autorisation (38) et pour fournir en outre l'autorisation (38) au moins partiellement à la deuxième unité de traitement (58) en vue de l'évaluation,
**caractérisée en ce que**
la deuxième unité de traitement (58) est conçue pour générer un signal d'horloge dynamique (60) indépendant du signal de sortie (63) en fonction de l'autorisation (38) et pour fournir un redresseur (62) qui est conçu pour générer un signal analogique constant en fonction du signal d'horloge dynamique (60) ;
l'unité de sortie (16) est conçue pour combiner le signal analogique constant au signal de sortie (63) et pour activer les sorties sécurisées (52) uniquement lorsque le signal de sortie (63) et le signal analogique constant sont présents.

7. Dispositif (10) comprenant
une unité de sortie (16) selon la revendication 6,
une unité de commande multicanaux (12) destinée à lire et évaluer un signal d'entrée (34) et une section de transmission de données monocanal (22),
l'unité de commande multicanaux (12) étant reliée à l'unité de sortie (16) par le biais de la section de transmission de données à monocanal (22) et étant conçue pour générer une autorisation (38) en fonction du signal d'entrée (34), et
la section de transmission de données monocanal (22) étant conçue pour transmettre l'autorisation (38) provenant de l'unité de commande (12) à l'unité de sortie (16).
